# EUROPÄISCHE PATENTSCHRIFT

(11) **EP 3 547 473 B1**
(45) Veröffentlichungstag und Bekanntmachung des Hinweises auf die Patenterteilung: **14.09.2022**
(21) Anmeldenummer: 19164344.4
(22) Anmeldetag: 21.03.2019
(51) Int. Cl.: H02B 1/56, H02B 13/025

(54) **SCHALTANLAGE MIT VERBESSERTER LÜFTUNGSVORRICHTUNG**
SWITCHGEAR WITH IMPROVED VENTILATION DEVICE
INSTALLATION DE COMMUTATION POURVUE DE DISPOSITIF D'AÉRATION AMÉLIORÉ

(30) Priorität: 29.03.2018 DE 102018204889
(43) Veröffentlichungstag der Anmeldung: 02.10.2019
(73) Patentinhaber: Siemens Aktiengesellschaft, 80333 München (DE)
(72) Erfinder: Batuk, Mumtaz Burak, 34840 Maltepe- Istanbul (TR); Karadeniz, Tahsin, 41400 Gebze-Kocaeli (TR); Ozer, Cengiz, 13595 Berlin (DE)

(56) Entgegenhaltungen:
- DE-A1-102014 116 473
- DE-A1-102015 122 557
- DE-B3-102012 210 279
- US-A- 5 892 195

## Beschreibung

Die Erfindung bezieht sich auf eine Schaltanlage für Mittel- oder Hochspannungen mit einer verbesserten Lüftungsvorrichtung.

Für Mittel- und/oder Hochspannungsschaltanlagen existieren sowohl Lüftungskonzepte mit passiver, als auch mit aktiver, also forcierter, Belüftung. Gemein ist diesen Lüftungskonzepten, dass Klappen vorgesehen sind, die im Fall von Störlichtbögen in einzelnen Schaltanlagenteilen die anderen Schaltanlagenteile ganz oder teilweise vor den Auswirkungen eines Störlichtbogens schützen. Solche Klappen sind gewöhnlich derart in der Lüftungsvorrichtung angeordnet, dass die Klappen schräg in den in den Lüftungskanal der Lüftungsvorrichtung ragen und bei einem Störlichtbogen aus einer Auslöserichtung den Lüftungskanal verschließen. Die Druckwelle, die bei einem Störlichtbogen entsteht drückt also den von dem Lüftungskanal abstehenden Klappenteil in der Auslöserichtung in den Lüftungskanal. Ein Störlichtbogen aus einer anderen als der Auslöserichtung drückt die Klappe also gegen die Lüftungskanalwand und verschließt den Lüftungskanal nicht. Das gleiche Prinzip wird auch in anderen Anlagenteilen verwendet, die nicht ein Lüftungskanal sind, aber mit dem Lüftungskanal assoziiert sind, diesen also verschließen sollen. Die herkömmlichen Klappen vermindern also durch das Hereinragen in den Lüftungskanal oder in Anlagenteile die Lüftungseigenschaften.

Das Dokument US 5,892,195 A beschreibt eine Schaltanlage mit einem Schalterabteil und einem Stromschienenabteil, wobei in der Schaltanlage eine innere Kammer vorgesehen ist. Klappen zwischen dem Schalterabteil bzw. dem Stromschienenabteil und der inneren Kammer ermöglichen es, dass Druck und Gase, die bei Auftreten eines Störlichtbogens in einer der Kammern entstehen, durch die innere Kammer abgeleitet werden.

Die Druckschrift DE 10 2012 210 279 B3 beschreibt eine Verschlussvorrichtung zum Verschließen einer Durchgangsöffnung zwischen Funktionsräumen einer Schaltanlage. Die Verschlussvorrichtung weist eine Klappe auf, die zwischen zwei Durchgangsöffnungsbereichen angeordnet ist und die im Betriebszustand schräg in einen zwischen diesen Bereichen ausgebildeten Lüftungskanal hineinragt.

Aufgabe der Erfindung ist es die Nachteile aus dem Stand der Technik zu beheben und eine Lüftungsvorrichtung bereitstellen, die nicht nur verbesserte Eigenschaften aufweist, sondern günstig und effizient zu produzieren ist.

Die Aufgabe wir durch die unabhängigen Ansprüche 1 und 2 sowie die von diesen abhängigen Ansprüchen gelöst.

Ein erster Aspekt der Erfindung bezieht sich auf eine luftisolierte Schaltanlage für Mittel- oder Hochspannungen mit mindestens einem Schalterabteil, einem Stromschienenabteil und einem Verbindungsabteil, wobei die Schaltanlage mindestens eine aktive oder passive Lüftungsvorrichtung aufweist, wobei die Lüftungsvorrichtung einen oder mehr erste Lüftungsschächte aufweist, die vom Schalterabteil oder am Schalterabteil vorbei in das Stromschienenabteil führen, wobei
- der mindestens eine erste Lüftungsschacht mindestens eine erste Klappeneinheit aufweist, die einen Luftstrom vom Schalterabteil oder am Schalterabteil vorbei zum Stromschienenabteil in dem ersten Lüftungsschacht in einer ersten Betriebsposition nicht behindert, die erste Klappeneinheit im Falle eines Störlichtbogens im Stromschienenabteil den mindestens einen ersten Lüftungsschacht in einer Stromschienenstörlichtbogenposition verschließt, und wobei
- die erste Klappeneinheit eine oder mehr erste Klappen aufweist und die ersten Klappen in einer ersten Ausnehmung einer Wandung des ersten Lüftungsschachts angeordnet sind, so dass die eine oder mehr ersten Klappen durch eine Druckwelle im Falle eines Störlichtbogens im Stromschienenabteil den mindestens einen ersten Lüftungsschacht in der Stromschienenstörlichtbogenposition verschließt.

Durch die erste Ausnehmung wird erreicht, dass die ersten Klappen nicht derart in den ersten Lüftungsschacht ragen müssen, dass eine durch einen Störlichtbogen im Stromschienenabteil ausgelöste Druckwelle durch ein Mitreißen der ersten Klappen den ersten Lüftungsschacht verschließt. Stattdessen ermöglicht die erste Ausnehmung in der Wandung des ersten Lüftungsschachts, dass die Druckwelle aus dem Stromschienenabteil die ersten Klappen in den Lüftungsschacht drückt und so ein schnelles und schnelleres Schließen ermöglicht. Die ersten Klappen werden also bei dieser Ausführung von der Rückseite der ersten Klappen aus, also von der zur ersten Ausnehmung in der Wandung zugewandten Seite der ersten Klappen, von einer Druckwelle von einem Störlichtbogen aus dem Stromschienenabteil in den ersten Lüftungsschacht gedrückt und verschließt diesen.Ein zweiter Aspekt der Erfindung bezieht sich auf eine luftisolierte Schaltanlage für Mittel- oder Hochspannungen mit mindestens einem Schalterabteil, einem Stromschienenabteil und einem Verbindungsabteil, wobei die Schaltanlage mindestens eine aktive oder passive Lüftungsvorrichtung aufweist, wobei die Lüftungsvorrichtung einen oder mehr zweite Lüftungsschächte aufweist, die vom oder durch das Schalterabteil in das Verbindungsabteil führen, wobei
- der mindestens eine zweite Lüftungsschacht mindestens eine zweite Klappeneinheit und eine dritte Klappeneinheit aufweist, die derart angeordnet sind, dass die zweite Klappeneinheit einen Luftstrom in einer zweiten Betriebsposition in dem zweiten Lüftungsschacht nicht behindert und in einer Verbindungsabteilstörlichtbogenposition die zweite Klappeneinheit eine zweite Lüftungsöffnung zwischen dem Verbindungsabteil und dem Lüftungsschacht und die dritte Klappeneinheit eine dritte Lüftungsöffnung zwischen dem Lüftungsschacht und dem Schalterabteil verschließt und in einer Schalterabteilstörlichtbogenposition die dritte Klappeneinheit eine vierte Lüftungsöffnung zwischen dem Lüftungsschacht und dem Verbindungsabteil verschließt, und wobei
- die zweiten Klappen in der Betriebsposition in einer zweiten Ausnehmung in einem Lüftungsschachtanschluss derart angeordnet sind, die eine oder mehr zweiten Klappen durch eine Druckwelle im Falle eines Störlichtbogens im Verbindungsabteil den mindestens
- einen zweiten Lüftungsschacht in der Verbindungsabteilstörlichtbogenposition verschließt.

Durch die zweite Ausnehmung wird erreicht, dass die zweiten Klappen nicht derart in den zweiten Lüftungsschacht ragen müssen, dass eine durch einen Störlichtbogen im Verbindungsabteil ausgelöste Druckwelle durch ein Mitreißen der zweiten Klappen den zweiten Lüftungsschacht verschließt. Stattdessen ermöglicht die zweite Ausnehmung in dem Lüftungsschachtanschluss des zweiten Lüftungsschachts, dass die Druckwelle aus dem Verbindungsabteil die zweiten Klappen in den Lüftungsschachtanschluss drückt und so ein schnelles und schnelleres Schließen ermöglicht. Die zweiten Klappen werden also bei dieser Ausführung von der Rückseite der zweiten Klappen aus, also von der zur zweiten Ausnehmung in dem Lüftungsschachtanschluss zugewandten Seite der zweiten Klappen, von einer Druckwelle von einem Störlichtbogen aus dem Verbindungsabteil in den Lüftungsschachtanschluss deszweiten Lüftungsschachts gedrückt und verschließt so den Lüftungsschachtanschluss und den des zweiten Lüftungsschacht.

Die luftisolierte Schaltanlage verfügt also über mindestens einen ersten Lüftungsschacht und/oder mindestens einen zweiten Lüftungsschacht, der oder die über eine oder mehr erste Klappeneinheiten, zweite Klappeneinheiten und/oder dritte Klappeneinheiten verfügen, die den Luftstrom durch den oder die ersten und/oder zweiten Lüftungsschächte nicht beeinträchtigen, aber im Falle eines Störlichtbogens eine Ausbreitung der durch den Lichtbogen erzeugten Druckwelle alle anderen Abteile unterbindet oder verringert. Das ermöglicht eine höhere Stromtragfähigkeit, kleinere Lüftungsvorrichtungen und/oder geringeren Luftdurchsatz bei einem einfacheren und effizienteren Aufbau.

Unter der Formulierung, dass die vom Schalterabteil oder am Schalterabteil vorbei in das Stromschienenabteil führen, ist zu verstehen, dass:
der oder die ersten Lüftungsschächte derart angeordnet sind, dass der oder die ersten Lüftungsschächte von dem Schalterabteil in das Stromschienenabteil führen oder von der Seite der Schaltanlage mit der HV-Tür des Schalterabteils an dem Schalterabteil vorbei in das Stromschienenabteil führen und so eine Lüftung des Stromschienenabteils von der Seite der Schaltanlage mit der HV-Tür des Schalterabteils durch das Schalterabteil oder an dem Schalterabteil vorbei ermöglicht.

Unter der Formulierung, dass der oder die zweiten Lüftungsschächte vom Schalterabteil und/oder durch das Schalterabteil in das Verbindungsabteil führen, ist zu verstehen, dass:
der oder die zweiten Lüftungsschächte von der Seite der Schaltanlage mit der HV-Tür des Schalterabteils zum Schalterabteil und/oder zum Verbindungsabteil führen.

Es wird bevorzugt, dass die erste Klappeneinheit eine oder mehr erste Klappen aufweist und die erste Klappeneinheit weiter eine oder mehrere erste Fixiereinheiten aufweist, die jeweils einer oder mehr ersten Klappen zugeordnet sind und die erste Fixiereinheit die ersten Klappen in der Stromschienenstörlichtbogenposition derart fixiert, dass ein Zurückbewegen in die Betriebsposition nach einem Störlichtbogen im Stromschienenabteil verhindert wird.

Die ersten Fixiereinheiten werden bevorzugt durch Einrastelemente realisiert, die im ersten Lüftungsschacht anordnenbar sind. Diese Einrastelemente können beispielsweise gebogene Metallbleche, insbesondere durch Metallklammern, gebildet werden. Die Einrastelemente weisen bevorzugt einen Gleitbereich, insbesondere einen gebogenen Gleitbereich auf, über den die jeweils zugeordnete erste Klappe von der ersten Betriebsposition in die Stromschienenstörlichtbogenposition rutschen oder gleiten kann und einen Stoppbereich, insbesondere einen abstehenden Stoppbereich, der eine Bewegung von der Stromschienenstörlichtbogenposition in die erste Betriebsposition verhindert.

Bevorzugt wird auch, dass die zweite Klappeneinheit eine oder mehr zweite Klappen aufweist und die zweite Klappeneinheit weiter eine oder mehrere zweite Fixiereinheiten aufweist, die jeweils einer oder mehr zweiten Klappen zugeordnet sind und die zweite Fixiereinheit die zweiten Klappen in der Verbindungsabteilstörlichtbogenposition derart fixiert, dass ein Zurückbewegen in die zweite Betriebsposition nach einem Störlichtbogen im Verbindungsabteil verhindert wird.

Die zweiten Fixiereinheiten werden bevorzugt durch Einrastelemente realisiert, die im zweiten Lüftungsschacht anordnenbar sind. Diese Einrastelemente können beispielsweise gebogene Metallbleche, insbesondere durch Metallklammern, gebildet werden. Die Einrastelemente weisen bevorzugt einen Gleitbereich, insbesondere einen gebogenen Gleitbereich auf, über den die jeweils zugeordnete zweiten Klappen von der zweiten Betriebsposition in die Verbindungsabteilstörlichtbogenposition rutschen oder gleiten kann und einen Stoppbereich, insbesondere einen abstehenden Stoppbereich, der eine Bewegung der zweiten Klappen von der Verbindungsabteilstörlichtbogenposition in die zweite Betriebsposition verhindert. Auch wird bevorzugt, dass die dritte Klappeneinheit eine oder mehr dritte Klappen aufweist und die dritte Klappeneinheit weiter eine oder mehrere dritte Fixiereinheiten aufweist, die jeweils einer oder mehr dritten Klappen zugeordnet sind und die dritte Fixiereinheit die dritten Klappen in der Verbindungsabteilstörlichtbogenposition derart fixiert, dass ein Zurückbewegen in die Betriebsposition nach einem Störlichtbogen im Verbindungsabteil verhindert wird.

Die dritten Fixiereinheiten werden bevorzugt durch Einrastelemente realisiert, die im zweiten Lüftungsschacht anordnenbar sind. Diese Einrastelemente können beispielsweise gebogene Metallbleche, insbesondere durch Metallklammern, gebildet werden. Die Einrastelemente weisen bevorzugt einen Gleitbereich, insbesondere einen gebogenen Gleitbereich auf, über den die jeweils zugeordnete dritten Klappen von der zweiten Betriebsposition in die Verbindungsabteilstörlichtbogenposition rutschen oder gleiten kann und einen Stoppbereich, insbesondere einen abstehenden Stoppbereich, der eine Bewegung der dritten Klappen von der Verbindungsabteilstörlichtbogenposition in die zweite Betriebsposition verhindert.

Bevorzugt wird auch, dass die dritte Klappeneinheit eine oder mehr dritte Klappen aufweist und die dritte Klappeneinheit weiter eine oder mehrere vierte Fixiereinheiten aufweist, die jeweils einer oder mehr dritten Klappen zugeordnet sind und die vierte Fixiereinheit die dritten Klappen in der Schalterabteilstörlichtbogenposition derart fixiert, dass ein Zurückbewegen in die zweite Betriebsposition nach einem Störlichtbogen im Schalterabteil verhindert wird.

Die vierten Fixiereinheiten werden bevorzugt durch Einrastelemente realisiert, die im zweiten Lüftungsschacht anordnenbar sind. Diese Einrastelemente können beispielsweise gebogene Metallbleche, insbesondere durch Metallklammern, gebildet werden. Die Einrastelemente weisen bevorzugt einen Gleitbereich, insbesondere einen gebogenen Gleitbereich auf, über den die jeweils zugeordnete dritten Klappen von der zweiten Betriebsposition in die Schalterabteilstörlichtbogenposition rutschen oder gleiten kann und einen Stoppbereich, insbesondere einen abstehenden Stoppbereich, der eine Bewegung der dritten Klappen von der Schalterabteilstörlichtbogenposition in die zweite Betriebsposition der dritten Klappen verhindert.

Bevorzugt wird, dass die dritte Klappeneinheit eine oder mehr dritte Klappen aufweist und die dritten Klappen in der zweiten Betriebsposition der dritten Klappen einen Luftstrom durch den zweiten Lüftungsschacht nicht behindern und/oder den Luftstrom durch den zweiten Lüftungsschacht in einen Verbindungsabteilluftstrom und einen Schalterabteilluftstrom teilt.

Auch wird bevorzugt, dass eine forcierte, also aktive, Lüftung einen Luftstrom im mindestens einen ersten Lüftungsschacht erzeugt.

Bevorzugt wird auch, dass eine passive Lüftung einen Luftstrom im mindestens einen zweiten Lüftungsschacht erzeugt oder der Luftstrom erreicht wird.

Auch wird bevorzugt, dass eine aktive Lüftung einen Luftstrom im mindestens einen zweiten Lüftungsschacht erzeugt.

Weiter wird bevorzugt, dass in mindestens einem ersten Lüftungsschacht ein Luftstrom durch eine forcierte Lüftung erzeugt wird und dass in mindestens einem zweiten Lüftungsschacht ein Luftstrom durch eine passive Lüftung erreicht wird.

Bevorzugt wird auch, dass eine passive Lüftung einen Luftstrom im mindestens einen ersten Lüftungsschacht erzeugt oder der Luftstrom erreicht wird.

Auch wird bevorzugt, dass eine passive Lüftung einen Luftstrom im mindestens einen ersten Lüftungsschacht erzeugt oder der Luftstrom erreicht wird und eine aktive Lüftung einen Luftstrom im mindestens einen zweiten Lüftungsschacht erzeugt.

Bevorzugt wird auch, dass eine forcierte Lüftung einen Luftstrom im mindestens einen ersten Lüftungsschacht erzeugt und dass eine aktive Lüftung einen Luftstrom im mindestens einen zweiten Lüftungsschacht erzeugt.

Auch wird bevorzugt, dass eine passive Lüftung einen Luftstrom im mindestens einen ersten Lüftungsschacht erzeugt oder der Luftstrom erreicht wird und dass eine passive Lüftung einen Luftstrom im mindestens einen zweiten Lüftungsschacht erzeugt oder der Luftstrom erreicht wird.

Die Erfindung wird im Folgenden beispielhaft anhand von Figuren erläutert.
- Figur 1:: Schematische perspektivische Darstellung einer erfindungsgemäßen Schaltanlage;
- Figur 2:: Schematische Seitenansicht einer erfindungsgemäßen Schaltanlage;
- Figur 3:: Schematische Darstellung eines Teils eines ersten Lüftungsschachts einer erfindungsgemäßen Schaltanlage;
- Figur 4:: Schematische Darstellung eines Ausschnittes eines erfindungsgemäßen ersten Lüftungsschachtes;
- Figur 5:: Schematische Seitenansicht eines Einrastelementes der ersten Fixiereinheit aus Figur 4;
- Figur 6:: Schematische Seitenansicht einer erfindungsgemäßen Schaltanlage mit zweitem Lüftungsschacht;
- Figur 7:: Schematische Darstellung eines Ausschnittes eines erfindungsgemäßen zweiten Lüftungsschachtes bei einem Verbindungsabteilstörlichtbogen;
- Figur 8:: Schematische Darstellung eines Ausschnittes eines erfindungsgemäßen zweiten Lüftungsschachtes bei einem Schalterabteilstörlichtbogen;

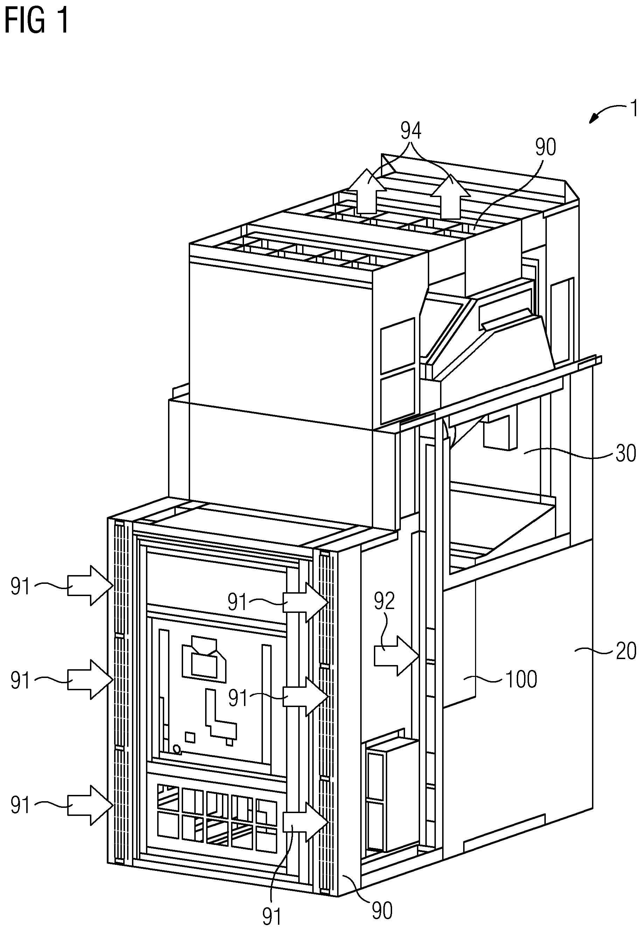

Die Figur 1 zeigt eine schematische Darstellung einer Luftisolierten Schaltanlage 1 mit einem Schalterabteil 10, einem Verbindungsabteil 20, einem Stromschienenabteil 30 und einer Lüftungsvorrichtung 90.

In der Darstellung der Figur 1 ist die Seitenwand des Stromschienenabteils 30 nicht dargestellt, so wird ein Einblick in das Stromschienenabteil 30 ermöglicht.

Die Lüftungsvorrichtung 90 weist dabei Einströmöffnungen 91, Überleitungsöffnungen 92 und Ausströmöffnungen 94 auf. Bevorzugt und in der Figur 1 nicht gezeigt ist im Bereich der Ausströmoffnungen 94 ein Lüftungselement für eine forcierte Lüftung vorgesehen. Ein solches Lüftungselement kann insbesondere von einem Ventilator gebildet werden. Alternativ, hier nicht gezeigt, kann auch ein Lüftungselement für eine forciere Lüftung, also aktive Lüftung, im Bereich der Einströmöffnungen 91 und/oder der Überleitungsöffnungen 92 vorgesehen sein.

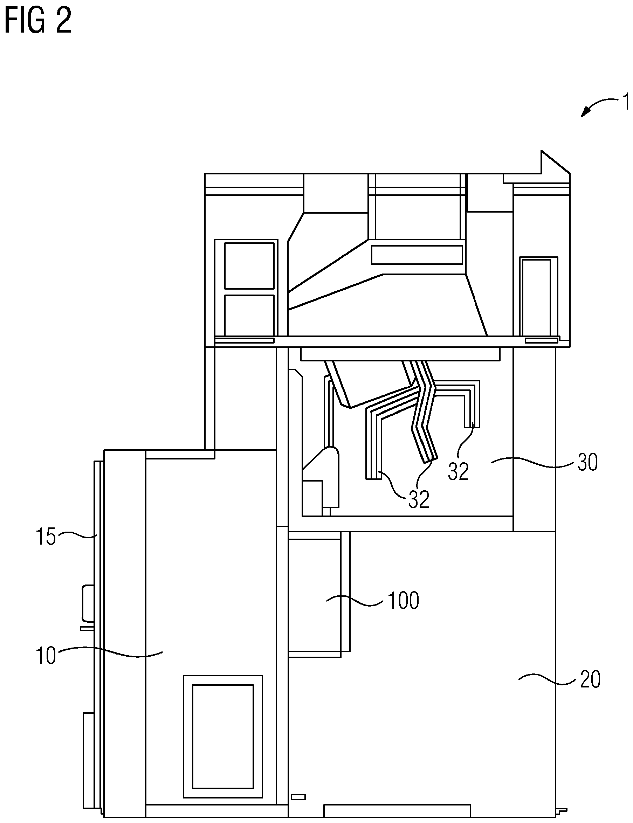

Die Figur 2 zeigte eine schematische Seitenansicht einer erfindungsgemäßen Schaltanlage 1 mit geschlossene, Schalterabteil 10 und geschlossenen Verbindungsabteil 20 und einem Stromschienenabteil 30, wobei in der Darstellung die Seitenwand des Stromschienenabteils 30 nicht dargestellt ist und so ein Einblick in das Stromschienenabteil 30 gewährt wird. Das Schalterabteil 10 ist durch eine HV-Tür 15 verschlossen. Im Stromschienenabteil 30 sind Stromschienen 32 angeordnet.

Der in der Figur 2 gezeigte erste Lüftungsschacht 100 führt von der Seite der Schaltanlage 1 mit der HV-Tür 15 des Schalterabteils 10 an dem Schalterabteil 10 vorbei in das Stromschienenabteil 30 und ermöglicht so eine Lüftung des Stromschienenabteils 30 von der Seite der Schaltanlage 1 mit der HV-Tür 15 des Schalterabteils 10 an dem Schalterabteil 10 vorbei.

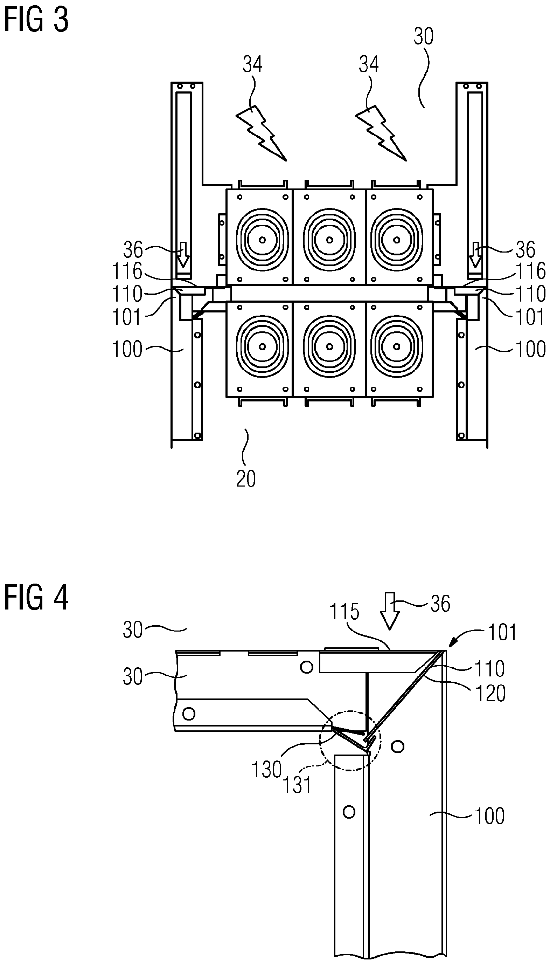

Die Figur 3 zeigt einer schematischen Darstellung eines Teils eines ersten Lüftungsschachts 100 einer erfindungsgemäßen Schaltanlage 1. Im Falle eines Störlichtbogens 34 in dem Stromschienenabteil 30 wandert eine Druckwelle in Richtung der Pfeile 36. Die Druckwelle in Richtung der Pfeile 36 und wirkt so auf eine erste Klappeneinheit 101. Die beiden gezeigten ersten Klappeneinheiten 101 weisen hier jeweils eine erste Klappe 110 auf. In der Figur 3 sind die Klappeneinheiten in einer ersten Betriebsposition 115 gezeigt, bei der die Klappen 110 in einer ersten Ausnehmung 116 einer Wandung des ersten Lüftungsschachts 100 angeordnet sind. Die Druckwelle in Richtung der Pfeile 36 bewirkt in der Figur 3 eine Kraft auf die ersten Klappen 110, die eine Bewegung der ersten Klappen aus der gezeigten ersten Betriebsposition in die hier nicht gezeigte Stromschienenstörlichtbogenposition 120, siehe Figur 4, bewirkt.

Unterhalb des Stromschienenabteils 30 ist das Verbindungsabteil angeordnet 20.

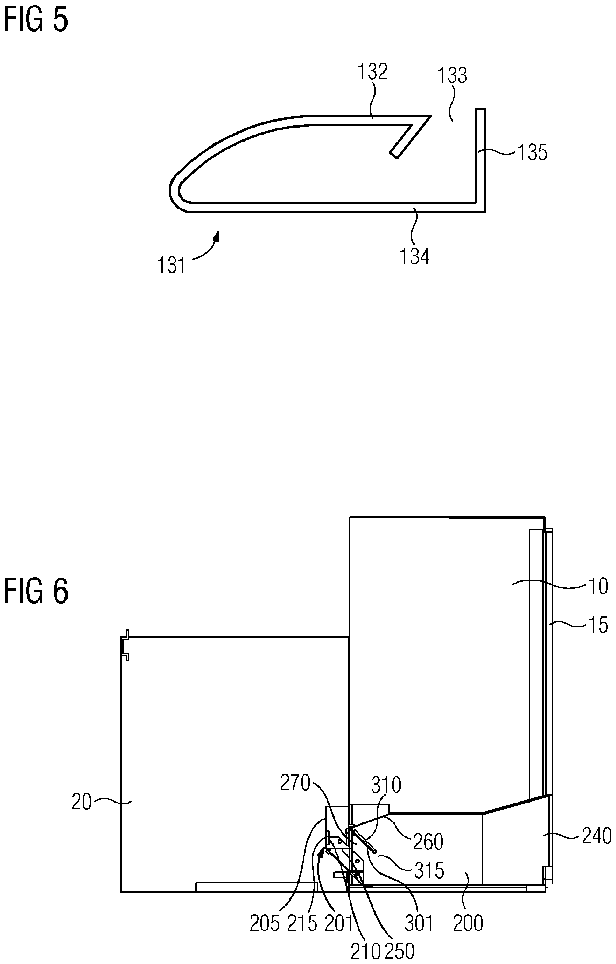

Die Figur 4 zeigt eine schematische Darstellung eines Ausschnittes eines erfindungsgemäßen ersten Lüftungsschachtes 100 einer Schaltanlage 1 mit einem Teil des Stromschienenabteils 30 und des Verbindungsabteil 20. Die erste Klappe 110 der ersten Klappeneinheit 101 befindet sich in der Figur 4 in der Stromschienenstörlichtbogenposition 120 und verschließt so den ersten Lüftungsschacht 100 gegenüber der Druckwelle in Richtung des Pfeiles 36. Der Lüftungsschacht 100 wird also von der erste Klappe 110 der ersten Klappeneinheit 101 in der Stromschienenstörlichtbogenposition 120 verschlossen. Die erste Fixiereinheit 130 der ersten Klappeneinheit 101 wird in der Figur 4 durch eine Halteklammer gebildet und verhindert, dass die erste Klappe 110 aus der Stromschienenstörlichtbogenposition 120 in die erste Betriebsposition 115 zurückbewegt wird. Das Einrastelement 131 der ersten Fixiereinheit 130 wird in der Figur 5 gezeigt.

Die Figur 5 zeigt das Einrastelement 131 der Fixiereinheit 130 der Figur 4. Das Einrastelement 131 weist im Fall der Figur 4 einen gebogenen Gleitbereich 132, einen abstehenden Stoppbereich 133, einen Verbindungsbereich 134 und ein Anschlagelement 135 auf. Das Anschlagelement 135 kann insbesondere, hier nicht gezeigt, durch einen Teil der Fixiereinheit gebildet werden oder als separates Bauteil ausgeführt sein. Das Anschlagelement 135 dient der Festlegung einer Endposition einer Bewegung der jeweils zugeordneten Klappe, hier der erste Klappe der ersten Klappeneinheit. Bei einem Störlichtbogen im Stromschienenabteil 30 wird Klappe 110 der ersten Klappeneinheit 101 aus der ersten Betriebsposition 115 in die Stromschienenstörlichtbogenposition 120 bewegt. Dabei gleitet die erste Klappe 110 über den gebogenen Gleitbereich 132 des Einrastelements 131 und drückt den gebogenen Gleitbereich 132 aus dem Bewegungspfad der ersten Klappe 110. Wenn die erste Klappe 110 den gebogenen Gleitbereich 132 passiert hat, wird der gebogene Gleitbereich 132 wieder in die ursprüngliche Position zurückbewegt, hier durch eine innenwohnende Federrückstellkraft oder alternativ und hier nicht gezeigt durch eine von außen auf den gebogene Gleitbereich 132 wirkende Federkraft. Durch diese Zurückbewegung des gebogenen Gleitbereichs 132 wird die Klappe zwischen dem Anschlagelement 135 und dem abstehenden Stoppbereich 133 fixiert, also an einer Rückbewegung in die erste Betriebsposition 115 gehindert. Der gebogene Gleitbereich 132 geht in dem Beispiel der Figur 5 in den abstehenden Stoppbereich 133 über. Das Anschlagelement 135 wird in der Figur 5 mit dem gebogenen Gleitbereich 132 durch einen Verbindungsbereich 134 verbunden. Alternativ und hier nicht gezeigt können das Anschlagelement 135 und der gebogene Gleitbereich 132 mit abstehenden Stoppbereich 133 auch als getrennte, also separate, Bauteile ausgeführt sein und separat in der luftisolierten Schaltanlage 1 angeordnet und befestigt sein. Die in der Figur 5 gezeigte Ausführung des Einrastelementes 130 ist analog auf die Einrastelemente der zweiten Fixiereinheit 290, dritten Fixiereinheit 390 und vierten Fixiereinheit 490 übertragbar, mit jeweils zu fixierenden zweiten Klappen 210 und dritten Klappen 310.

Die Figur 6 zeigt eine schematische Seitenansicht einer erfindungsgemäßen luftisolierten Schaltanlage 1 mit zweitem Lüftungsschacht 200, der im Schalterabteil 10 oder unter einem Schalterabteil 10 angeordnet ist. Der Lüftungsschacht 200 führt von der Seite der luftisolierten Schaltanlage 1 mit der HV-Tür 15 in das Schalterabteil 10 und das Verbindungsabteil 20 führt. Der Lüftungsschacht 200 weist eine erste Lüftungsöffnung 240, eine zweite Lüftungsöffnung 250, eine dritte Lüftungsöffnung 260 und vierte Lüftungsöffnung 270 auf. Die erste Lüftungsöffnung 240 bildet eine Öffnung zum Einströmen oder Ausströmen von Luft in oder aus dem Lüftungsschacht 200. Die zweite Lüftungsöffnung 250 ist zwischen dem Lüftungsschachtanschluss 205 und dem Lüftungsschacht angeordnet. Die dritte Lüftungsöffnung 260 ist zwischen dem Schalterabteil und dem Lüftungsschacht 200 angeordnet und ermöglicht die Belüftung des Schalterabteils 10. Die vierte Lüftungsöffnung 270 ist im Lüftungsschachtanschluss 205 vorgesehen.

Die Figur 6 zeigt die zweite Klappeneinheit 201 mit einer zweiten Klappe 210. Die zweite Klappe 210 ist in einer zweiten Ausnehmung 216 des Lüftungsschachtanschluss 205 angeordnet. Die zweite Klappe 210 befindet sich in der Figur 6 in der zweiten Betriebsposition 215. In dieser zweiten Betriebsposition befindet sich die zweite Klappe 210 nicht im Weg des Luftstroms zum Belüften des Verbindungsabteils 20.

Die dritte Klappeneinheit 301 weist eine dritte Klappe 310 auf, die sich in der dritten Betriebsposition 315 befindet. In dieser dritten Betriebsposition 315 befindet sich die dritte Klappe 310 zwar partiell im Weg des Luftstroms zum Belüften des Verbindungsabteils 20 und des Schalterabteils 10 bildet aber einen Luftstromteiler zwischen dem Verbindungsabteil 20 und des Schalterabteil 10, behindert also nicht den Luftstrom, sondern gewährleistet eine geplante Belüftung.

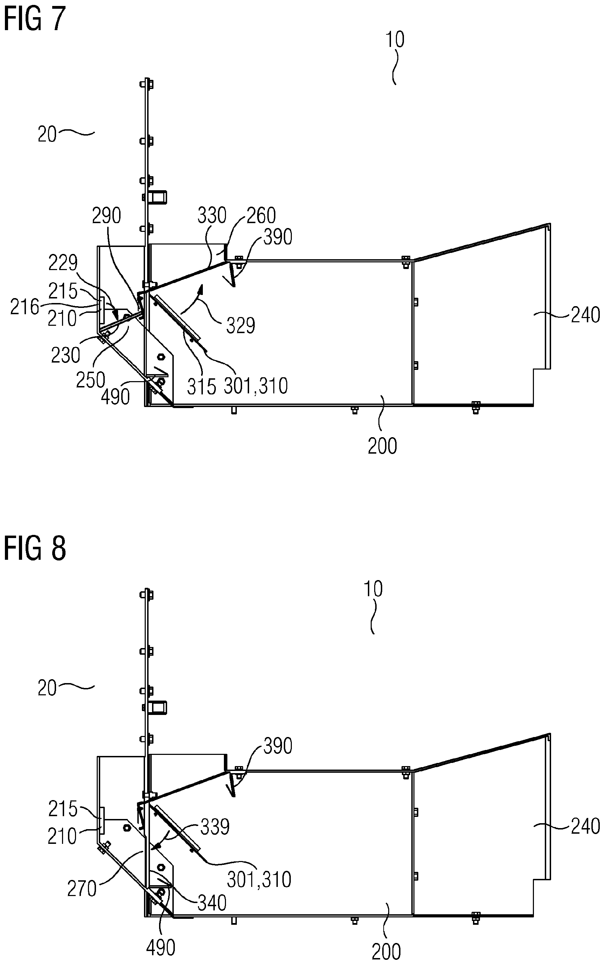

Die Figur 7 zeigt eine schematische Darstellung eines Ausschnittes eines erfindungsgemäßen zweiten Lüftungsschachtes 200 bei einem Verbindungsabteilstörlichtbogen einer luftisolierten Schaltanlage 1.

Im Fall eines Störlichtbogens im Verbindungsabteil 20, einen sogenannten Verbindungsabteilstörlichtbogen, entsteht im Verbindungsabteil 20 ein Überdruck und somit eine Druckwelle, deren Ausbreitung innerhalb der luftisolierten Schaltanlage 1 verhindert, beziehungsweise eingeschränkt werden soll. Die Druckwelle im Verbindungsabteil 20 verursacht durch die zweite Ausnehmung in der Wand des Lüftungsschachtanschlusses 205 hindurch eine Bewegung der zweiten Klappe 210 aus der Betriebsposition 215 der Figur 6 in Richtung des Pfeiles 229 in die Verbindungsabteilstörlichtbogenposition 230. In der Verbindungsabteilstörlichtbogenposition 230 wird die zweite Lüftungsöffnung 250 im Lüftungsschachtanschluss 205 des zweiten Lüftungsschachtes 200 von der zweiten Klappe 210 verschlossen. Durch die zweite Klappe 210 wird die Ausbreitung der Druckwelle aus dem Verbindungsabteil 20 in den Lüftungsschacht 200 verhindert, beziehungsweise eingeschränkt. Bei der Bewegung der zweiten Lüftungsklappe 210 aus der zweiten Betriebsposition 215 in die Verbindungsabteilstörlichtbogenposition 230 gleitet die Klappe 210 über einen gebogenen Gleitbereich, hier nur schematisch dargestellt, vergleiche Figur 5 gebogener Gleitbereich 132, der zweiten Fixiereinheit 290. Nach dem Passieren des gebogenen Gleitbereichs des zweiten Fixierungselements 290 wird die zweite Klappe 210 an einer Bewegung zurück in die zweite Betriebsposition 215 durch einen abstehenden Stoppbereich, hier nur schematisch dargestellt, vergleiche Figur 5 abstehender Stoppbereich 133, gehindert. Die zweite Klappe 210 wird also in der Verbindungsabteilstörlichtbogenposition 230 zwischen dem abstehenden Stoppbereich und einem Anschlagelement der zweiten Fixiereinheit 290 fixiert, also sicher gehalten. So wird die zweite Lüftungsöffnung 240 im Lüftungsschachtanschluss 205 des zweiten Lüftungsschachtes durch die zweite Klappe 210 wirksam verschlossen.

Die Druckwelle aus dem Verbindungsabteil 20 bewirkt weiter eine Bewegung der dritten Klappe 310 in Richtung des Pfeiles 329 in die Verbindungsabteilstörlichtbogenposition 330. Die dritte Klappe 310 wird dabei aus der Betriebsposition 315 der Figur 6 in Richtung des Pfeiles 329 in die Verbindungsabteilstörlichtbogenposition 330 bewegt. In der Verbindungsabteilstörlichtbogenposition 330 wird die dritte Lüftungsöffnung 260 zwischen dem Lüftungsschacht 200 und dem Schalterabteil 10 von der dritten Klappe 310 verschlossen. Durch die dritte Klappe 310 wird die Ausbreitung der Druckwelle aus dem Verbindungsabteil 20 in das Schalterabteil 10 verhindert, beziehungsweise eingeschränkt. Bei der Bewegung der dritten Lüftungsklappe 310 aus der dritten Betriebsposition 315 in die Verbindungsabteilstörlichtbogenposition 330 gleitet die Klappe 310 über einen gebogenen Gleitbereich, hier nur schematisch dargestellt, vergleiche Figur 5 gebogener Gleitbereich 132, der dritten Fixiereinheit 390. Nach dem Passieren des gebogenen Gleitbereichs der dritten Fixiereinheit 390 wird die dritte Klappe 310 an einer Bewegung zurück in die dritte Betriebsposition 315 durch einen abstehenden Stoppbereich, hier nur schematisch dargestellt, vergleiche Figur 5 abstehender Stoppbereich 133, gehindert. Die dritte Klappe 310 wird also in der Verbindungsabteilstörlichtbogenposition 330 zwischen dem abstehenden Stoppbereich und einem Anschlagelement der dritten Fixiereinheit 390 fixiert, also sicher gehalten. So wird die dritte Lüftungsöffnung 260 zwischen dem Lüftungsschacht 200 und dem Schalterabteil 10 durch die dritte Klappe 310 wirksam verschlossen.

Die Figur 8 zeigt eine schematische Darstellung eines Ausschnittes eines erfindungsgemäßen zweiten Lüftungsschachtes 200 bei einem Lichtbogen im Schalterabteil 10 einer luftisolierten Schaltanlage 1.

Durch die Druckwelle in dem Schalterabteil 10 wird eine Bewegung der dritten Klappe 310 in Richtung des Pfeiles 339 in die Schalterabteilstörlichtbogenposition 340 bewirkt. Die dritte Klappe 310 wird dabei aus der Betriebsposition 315 der Figur 6 in Richtung des Pfeiles 339 in die Schalterabteilstörlichtbogenposition 340 bewegt. In der Schalterabteilstörlichtbogenposition 340 wird die vierte Lüftungsöffnung 270 zwischen dem Lüftungsschacht 200 und dem Lüftungsschachtanschluss 205 und somit auch zwischen dem Lüftungsschacht 200 und dem Verbindungsabteil 20 von der dritten Klappe 310 verschlossen. Durch die dritte Klappe 310 wird die Ausbreitung der Druckwelle des Schalterabteilstörlichtbogens aus dem Schalterabteil 10 in das Verbindungsabteil 20 verhindert, beziehungsweise eingeschränkt. Bei der Bewegung der dritten Lüftungsklappe 310 aus der dritten Betriebsposition 315 in die Schalterabteilstörlichtbogenposition 340 gleitet die dritte Klappe 310 über einen gebogenen Gleitbereich, hier nur schematisch dargestellt, vergleiche Figur 5 gebogener Gleitbereich 132, der vierten Fixiereinheit 490. Nach dem Passieren des gebogenen Gleitbereichs der vierten Fixiereinheit 490 wird die dritte Klappe 310 an einer Bewegung zurück in die dritte Betriebsposition 315 durch einen abstehenden Stoppbereich, hier nur schematisch dargestellt, vergleiche Figur 5 abstehender Stoppbereich 133, gehindert. Die dritte Klappe 310 wird also in der Schalterabteilstörlichtbogenposition 340 zwischen dem abstehenden Stoppbereich und einem Anschlagelement der vierten Fixiereinheit 490 fixiert, also sicher gehalten. So wird die vierte Lüftungsöffnung 270 zwischen dem Lüftungsschacht 200 und dem Lüftungsschachtanschluss 205 und somit auch zwischen dem Lüftungsschacht 200 und dem Verbindungsabteil 20 von der dritten Klappe 310 wirksam verschlossen.

### Bezugszeichenliste

- 1: Luftisolierte Schaltanlage;
- 10: Schalterabteil;
- 20: Verbindungsabteil;
- 30: Stromschienenabteil;
- 32: Stromschienen;
- 34: Störlichtbogen in dem Stromschienenabteil 30;
- 36: Pfeile in Richtung der Druckwelle bei einem Störlichtbogen 34 in dem Stromschienenabteil 30;
- 90: Lüftungsvorrichtung;
- 91: Einströmöffnungen;
- 92: Überleitungsöffnungen;
- 94: Ausströmöffnungen;
- 100: erste Lüftungsschächte;
- 101: erste Klappeneinheit;
- 110: erste Klappen der ersten Klappeneinheit;
- 115: erste Betriebsposition der ersten Klappeneinheit 101;
- 116: erste Ausnehmungen;
- 120: Stromschienenstörlichtbogenposition der ersten Klappeneinheit 101;
- 130: erste Fixiereinheit der ersten Klappeneinheit 101 mit einem Einrastelement 131;
- 131: Einrastelement der ersten Fixiereinheit 130;
- 132: gebogener Gleitbereich des Einrastelements 131;
- 133: abstehender Stoppbereich des Einrastelements 131;
- 134: Verbindungsbereich des Einrastelements 131;
- 135: Anschlagelement des Einrastelements 131;
- 200: zweite Lüftungsschächte;
- 201: zweite Klappeneinheit;
- 205: Lüftungsschachtanschluss am zweiten Lüftungsschacht 200;
- 210: zweite Klappen der zweiten Klappeneinheit 201;
- 215: zweite Betriebsposition der zweiten Klappeneinheit 201;
- 216: zweite Ausnehmungen;
- 229: Pfeil in Bewegungsrichtung der zweite Klappen 210;
- 230: Verbindungsabteilstörlichtbogenposition der zweiten Klappeneinheit 201;
- 240: erste Lüftungsöffnung eines zweiten Lüftungsschachts 200;
- 250: zweite Lüftungsöffnung eines zweiten Lüftungsschachts 200;
- 260: dritte Lüftungsöffnung eines zweiten Lüftungsschachts 200;
- 270: vierte Lüftungsöffnung eines zweiten Lüftungsschachts 200;
- 290: zweite Fixiereinheit der zweiten Klappeneinheit 201;
- 301: dritte Klappeneinheit;
- 310: dritte Klappen der dritten Klappeneinheit 301;
- 315: zweite Betriebsposition der dritten Klappeneinheit 301;
- 329: Pfeil in Bewegungsrichtung der dritten Klappen 310;
- 330: Verbindungsabteilstörlichtbogenposition der dritten Klappeneinheit 301;
- 339: Pfeil in Bewegungsrichtung der dritten Klappen 310;
- 340: Schalterabteilstörlichtbogenposition der dritten Klappeneinheit 301;
- 390: dritte Fixiereinheit der dritten Klappeneinheit 301;
- 490: vierte Fixiereinheiten der dritten Klappeneinheit 301;

## Patentansprüche

1. Luftisolierte Schaltanlage (1) für Mittel- oder Hochspannungen mit mindestens einem Schalterabteil (10), einem Stromschienenabteil (30) und einem Verbindungsabteil (20), wobei die Schaltanlage (1) mindestens eine aktive oder passive Lüftungsvorrichtung (90) aufweist, wobei die Lüftungsvorrichtung (90) einen oder mehr erste Lüftungsschächte (100) aufweist, die vom Schalterabteil (10) oder am Schalterabteil (10) vorbei in das Stromschienenabteil (30) führen, wobei
(A) der mindestens eine erste Lüftungsschacht (100) mindestens eine erste Klappeneinheit (101) aufweist, die einen Luftstrom vom Schalterabteil (10) oder am Schalterabteil (10) vorbei zum Stromschienenabteil (30) in dem ersten Lüftungsschacht (100) in einer ersten Betriebsposition (115) nicht behindert, die erste Klappeneinheit (101) im Falle eines Störlichtbogens im Stromschienenabteil (30) den mindestens einen ersten Lüftungsschacht (100) in einer Stromschienenstörlichtbogenposition (120) verschließt, und wobei
(B) die erste Klappeneinheit (101) wenigstens eine erste Klappe (110) aufweist, die in einer ersten Ausnehmung (116) einer Wandung des ersten Lüftungsschachts (100) angeordnet ist, so dass die wenigstens eine erste Klappe (110) durch eine Druckwelle im Falle eines Störlichtbogens im Stromschienenabteil (30) den mindestens einen ersten Lüftungsschacht (100) in der Stromschienenstörlichtbogenposition (120) verschließt.

2. Luftisolierte Schaltanlage (1) für Mittel- oder Hochspannungen mit mindestens einem Schalterabteil (10), einem Stromschienenabteil (30) und einem Verbindungsabteil (20), wobei die Schaltanlage (1) mindestens eine aktive oder passive Lüftungsvorrichtung (90) aufweist, wobei (C) die Lüftungsvorrichtung (90) einen oder mehr zweite Lüftungsschächte (200) aufweist, die vom Schalterabteil (10) oder durch das Schalterabteil (10) in das Verbindungsabteil (20) führen, wobei
(D) der mindestens eine zweite Lüftungsschacht (200) mindestens eine zweite Klappeneinheit (201) , welche eine oder mehr zweite Klappen (210) aufweist, und eine dritte Klappeneinheit (301) aufweist, die derart angeordnet sind, dass die zweite Klappeneinheit (201) einen Luftstrom in einer zweiten Betriebsposition (215)in dem zweiten Lüftungsschacht (200) nicht behindert und in einer Verbindungsabteilstörlichtbogenposition (230, 330) die zweite Klappeneinheit (201) eine zweite Lüftungsöffnung (250) zwischen dem Verbindungsabteil (20) und dem Lüftungsschacht (200) und die dritte Klappeneinheit (301) eine dritte Lüftungsöffnung (260) zwischen dem Lüftungsschacht (200) und dem Schalterabteil (10) verschließt und in einer Schalterabteilstörlichtbogenposition (340) die dritte Klappeneinheit (301) eine vierte Lüftungsöffnung (270) zwischen dem Lüftungsschacht (200) und dem Verbindungsabteil (20) verschließt, und wobei
(E) die zweiten Klappen (210) in der Betriebsposition (215) in einer zweiten Ausnehmung (216) in einem Lüftungsschachtanschluss (205) derart angeordnet sind, dass die eine oder mehr zweiten Klappen (210) durch eine Druckwelle im Falle eines Störlichtbogens im Verbindungsabteil (20) den mindestens einen zweiten Lüftungsschacht (200) in der Verbindungsabteilstörlichtbogenposition (230) verschließt.

3. Luftisolierte Schaltanlage nach Anspruch 1 mit den Merkmalen (C), (D) und (E) des Anspruchs 2.

4. Luftisolierte Schaltanlage (1) nach einem der Ansprüche 1 oder 3, wobei die erste Klappeneinheit (101) eine oder mehr erste Klappen (110) aufweist und die erste Klappeneinheit (101) weiter eine oder mehrere erste Fixiereinheiten (130) aufweist, die jeweils einer oder mehr ersten Klappen (110) zugeordnet sind und die erste Fixiereinheit (130) die ersten Klappen (110) in der Stromschienenstörlichtbogenposition (120) derart fixiert, dass ein Zurückbewegen in die erste Betriebsposition (115) nach einem Störlichtbogen im Stromschienenabteil (30) verhindert wird.

5. Luftisolierte Schaltanlage (1) nach einem der Ansprüche 2 bis 4, wobei die zweite Klappeneinheit (201) eine oder mehr zweite Klappen (210) aufweist und die zweite Klappeneinheit (201) weiter eine oder mehrere zweite Fixiereinheiten (290) aufweist, die jeweils einer oder mehr zweiten Klappen (210) zugeordnet sind und die zweite Fixiereinheit (290) die zweiten Klappen (210) in der Verbindungsabteilstörlichtbogenposition (230, 330) derart fixiert, dass ein Zurückbewegen in die zweite Betriebsposition (215) nach einem Störlichtbogen im Verbindungsabteil (20) verhindert wird.

6. Luftisolierte Schaltanlage (1) nach Anspruch 2 oder nach Anspruch 2 und wenigstens einem der Ansprüche 3 bis 5, wobei die dritte Klappeneinheit (301) eine oder mehr dritte Klappen (310) aufweist und die dritte Klappeneinheit (301) weiter eine oder mehrere dritte Fixiereinheiten (390) aufweist, die jeweils einer oder mehr dritten Klappen (310) zugeordnet sind und die dritte Fixiereinheit (390) die dritten Klappen (310) in der Verbindungsabteilstörlichtbogenposition (330) derart fixiert, dass ein Zurückbewegen in die Betriebsposition (315) nach einem Störlichtbogen im Verbindungsabteil (20) verhindert wird.

7. Luftisolierte Schaltanlage nach Anspruch 2 oder nach Anspruch 2 und wenigstens einem der Ansprüche 3 bis 6, wobei die dritte Klappeneinheit (301) eine oder mehr dritte Klappen (310) aufweist und die dritte Klappeneinheit (301) weiter eine oder mehrere vierte Fixiereinheiten (490) aufweist, die jeweils einer oder mehr dritten Klappen (310) zugeordnet sind und die vierte Fixiereinheit (490) die dritten Klappen (310) in der Schalterabteilstörlichtbogenposition (340) derart fixiert, dass ein Zurückbewegen in die zweite Betriebsposition (315) der dritten Klappen (310) nach einem Störlichtbogen im Schalterabteil (10) verhindert wird.

8. Luftisolierte Schaltanlage (1) nach Anspruch 2 oder nach Anspruch 2 und wenigstens einem der Ansprüche 3 bis 7, wobei die dritte Klappeneinheit (301) eine oder mehr dritte Klappen (310) aufweist und die dritte Klappen (310) in der Betriebsposition (315) einen Luftstrom durch den zweiten Lüftungsschacht (200) nicht behindert oder einen Luftstrom durch den zweiten Lüftungsschacht (200) in einen Verbindungsabteilluftstrom und einen Schalterabteilluftstrom teilt.

9. Luftisolierte Schaltanlage nach Anspruch 1 oder nach Anspruch 1 und wenigstens einem der Ansprüche 3 bis 8, wobei eine forcierte Lüftung einen Luftstrom im mindestens einen ersten Lüftungsschacht (100) erzeugt.

10. Luftisolierte Schaltanlage nach Anspruch 2 oder nach Anspruch 2 und wenigstens einem der Ansprüche 3 bis 10, wobei eine passive Lüftung einen Luftstrom im mindestens einen zweiten Lüftungsschacht (200) erzeugt.

## Claims

1. Air-insulated switchgear (1) for medium or high voltages having at least one switch compartment (10), a busbar compartment (30) and a connection compartment (20), wherein the switchgear (1) has at least one active or passive ventilation apparatus (90), the ventilation apparatus (90) having one or more first ventilation shafts (100) that lead from the switch compartment (10) or past the switch compartment (10) into the busbar compartment (30), wherein
(A) the at least one first ventilation shaft (100) has at least one first valve unit (101) that in a first operating position (115) does not impede an airstream from the switch compartment (10) or past the switch compartment (10) to the busbar compartment (30) in the first ventilation shaft (100), the first valve unit (101) sealing the at least one first ventilation shaft (100) in a busbar fault arc position (120) in the event of a fault arc in the busbar compartment (30), and wherein
(B) the first valve unit (101) has at least one first valve (110) that is arranged in a first recess (116) in a wall of the first ventilation shaft (100), so that in the busbar fault arc position (120) the at least one first valve (110) seals the at least one first ventilation shaft (100) as a result of a pressure wave in the event of a fault arc in the busbar compartment (30).

2. Air-insulated switchgear (1) for medium or high voltages having at least one switch compartment (10), a busbar compartment (30) and a connection compartment (20), wherein the switchgear (1) has at least one active or passive ventilation apparatus (90), wherein
(C) the ventilation apparatus (90) has one or more second ventilation shafts (200) that lead from the switch compartment (10) or through the switch compartment (10) into the connection compartment (20), wherein
(D) the at least one second ventilation shaft (200) has at least one second valve unit (201), which has one or more second valves (210), and a third valve unit (301) that are arranged such that in a second operating position (215) the second valve unit (201) does not impede an airstream in the second ventilation shaft (200), and in a connection compartment fault arc position (230, 330) the second valve unit (201) seals a second ventilation opening (250) between the connection compartment (20) and the ventilation shaft (200), and the third valve unit (301) seals a third ventilation opening (260) between the ventilation shaft (200) and the switch compartment (10), and in a switch compartment fault arc position (340) the third valve unit (301) seals a fourth ventilation opening (270) between the ventilation shaft (200) and the connection compartment (20), and wherein
(E) in the operating position (215) the second valves (210) are arranged in a second recess (216) in a ventilation shaft joint (205) such that in the connection compartment fault arc position (230) the one or more second valves (210) seal the at least one second ventilation shaft (200) as a result of a pressure wave in the event of a fault arc in the connection compartment (20).

3. Air-insulated switchgear according to Claim 1 having features (C), (D) and (E) from Claim 2.

4. Air-insulated switchgear (1) according to either of Claims 1 and 3,
wherein
the first valve unit (101) has one or more first valves (110) and the first valve unit (101) further has one or more first fixing units (130) that are each assigned to one or more first valves (110), and the first fixing unit (130) fixes the first valves (110) in the busbar fault arc position (120) such that movement back into the first operating position (115) is prevented after a fault arc in the busbar compartment (30).

5. Air-insulated switchgear (1) according to one of Claims 2 to 4,
wherein
the second valve unit (201) has one or more second valves (210) and the second valve unit (201) further has one or more second fixing units (290) that are each assigned to one or more second valves (210), and the second fixing unit (290) fixes the second valves (210) in the connection compartment fault arc position (230, 330) such that movement back into the second operating position (215) is prevented after a fault arc in the connection compartment (20).

6. Air-insulated switchgear (1) according to Claim 2 or according to Claim 2 and at least one of Claims 3 to 5, wherein
the third valve unit (301) has one or more third valves (310) and the third valve unit (301) further has one or more third fixing units (390) that are each assigned to one or more third valves (310), and the third fixing unit (390) fixes the third valves (310) in the connection compartment fault arc position (330) such that movement back into the operating position (315) is prevented after a fault arc in the connection compartment (20).

7. Air-insulated switchgear according to Claim 2 or according to Claim 2 and at least one of Claims 3 to 6, wherein
the third valve unit (301) has one or more third valves (310) and the third valve unit (301) further has one or more fourth fixing units (490) that are each assigned to one or more third valves (310), and the fourth fixing unit (490) fixes the third valves (310) in the switch compartment fault arc position (340) such that movement back into the second operating position (315) of the third valves (310) is prevented after a fault arc in the switch compartment (10).

8. Air-insulated switchgear (1) according to Claim 2 or according to Claim 2 and at least one of Claims 3 to 7, wherein
the third valve unit (301) has one or more third valves (310), and in the operating position (315) the third valves (310) do not impede an airstream through the second ventilation shaft (200) or divide an airstream through the second ventilation shaft (200) into a connection compartment airstream and a switch compartment airstream.

9. Air-insulated switchgear according to Claim 1 or according to Claim 1 and at least one of Claims 3 to 8, wherein
forced ventilation produces an airstream in the at least one first ventilation shaft (100).

10. Air-insulated switchgear according to Claim 2 or according to Claim 2 and at least one of Claims 3 to 10, wherein
passive ventilation produces an airstream in the at least one second ventilation shaft (200).

## Revendications

1. Installation (1) de distribution pour des tensions moyennes ou hautes à isolation par de l'air comprenant au moins une section (10) d'interrupteur, une section (30) de barre omnibus et une section (20) de communication, dans laquelle l'installation (1) de distribution a au moins un système (90) de ventilation actif ou passif, dans laquelle le système (90) de ventilation a une ou plusieurs cheminées (100) de ventilation, qui vont de la section (10) d'interrupteur, ou en passant à côté de la section (10) d'interrupteur, à la section (30) de barre omnibus,
dans laquelle
- (A) la au moins une première cheminée (100) de ventilation a au moins une première unité (101) à volet, qui, dans une première position (115) de fonctionnement, dans la première cheminée (100) de ventilation, ne fait pas obstacle à un courant d'air de la section (10) d'interrupteur, ou passant à côté de la section (10) d'interrupteur, à la section (30) de barre omnibus, la première unité (101) à volet ferme, dans une position (120) d'arc électrique perturbateur de la barre omnibus, dans le cas d'un arc électrique perturbateur dans la section (30) de barre omnibus, la au moins une première cheminée (100) de ventilation, et dans laquelle
- (B) la première unité (101) à volet a un premier volet (110), qui est disposé dans un premier évidement (116) d'une paroi de la première cheminée (100) de ventilation, de manière à ce que le au moins un premier volet (110) ferme, dans la position (120) d'arc électrique perturbateur de la barre omnibus, par une onde de pression, dans le cas d'un arc électrique perturbateur dans la section (30) de barre omnibus, la au moins une première cheminée (100) de ventilation.

2. Installation (1) de distribution pour des tensions moyennes ou hautes à isolation par de l'air, comprenant au moins une section (10) d'interrupteur, une section (30) de barre omnibus et une section (20) de liaison,
dans laquelle
l'installation (1) de distribution a au moins un système (90) de ventilation actif ou passif,
dans laquelle
- (C) le système (90) de ventilation a une ou plusieurs deuxièmes cheminées (200) de ventilation, qui vont de la section (10) d'interrupteur, ou à travers la section (10) d'interrupteur, à la section (20) de liaison,
dans laquelle
- (D) la au moins une deuxième cheminée (200) de ventilation a au moins une deuxième unité (201) à volet, qui a un ou plusieurs deuxièmes volets (210), et une troisième unité (301) à volet, qui sont montées de manière à ce que la deuxième unité (201) à volet ne fasse pas obstacle, dans une deuxième position (215) de fonctionnement, dans la deuxième cheminée (200) de ventilation, à un courant d'air, et, dans une position (230, 330) d'arc électrique perturbateur de la section de liaison, la deuxième unité (201) à volet ferme une deuxième ouverture (250) de ventilation entre la section (20) de liaison et la cheminée (200) de ventilation et la troisième unité (301) à volet ferme une troisième ouverture (260) de ventilation entre la cheminée (200) de ventilation et la section (10) d'interrupteur et, dans une position (340) d'arc électrique perturbateur de la section d'interrupteur, la troisième unité (301) à volet ferme une quatrième ouverture (270) de ventilation entre la cheminée (200) de ventilation et la section (20) de liaison, et dans laquelle
- (E) les deuxièmes volets (210) sont, dans la position (215) de fonctionnement, disposés dans un deuxième évidement (216) d'un raccord (205) de cheminée de ventilation, de manière à ce que le un ou les plusieurs deuxièmes volets (210) ferme, dans la position (230) d'arc électrique perturbateur de la section de liaison, par une onde de pression, dans le cas d'un arc électrique perturbateur dans la section (20) de liaison, la au moins une deuxième cheminée (200) de ventilation.

3. Installation de distribution à isolation par de l'air suivant la revendication 1, ayant les caractéristiques (C), (D) et (E) de la revendication 2.

4. Installation (1) de distribution à isolation par de l'air suivant l'une des revendications 1 ou 3,
dans laquelle
la première unité (101) à volet a un ou plusieurs premiers volets (110) et la première unité (101) à volet a une ou plusieurs unités (130) d'immobilisation, qui sont associées respectivement à un ou à plusieurs premiers volets (110), et la première unité (130) d'immobilisation immobilise les premiers volets (110) dans la position (120) d'arc électrique perturbateur de barre omnibus, de manière à faire obstacle à un retour dans la première position (115) de fonctionnement, après un arc électrique perturbateur dans la section (30) de barre omnibus.

5. Installation (1) de distribution à isolation par de l'air suivant l'une des revendications 2 à 4,
dans laquelle
la deuxième unité (201) à volet a un ou plusieurs deuxièmes volets (210) et la deuxième unité (201) à volet a en outre une ou plusieurs deuxièmes unités (290) d'immobilisation, qui sont associées respectivement à un ou à plusieurs deuxièmes volets (210), et la deuxième unité (290) d'immobilisation immobilise les deuxièmes volets (210) dans la position (230, 330) d'arc électrique perturbateur de la section de liaison, de manière à faire obstacle à un retour à la deuxième position (215) de fonctionnement, après un arc électrique perturbateur dans la section (20) de liaison.

6. Installation (1) de distribution à isolation par de l'air suivant la revendication 2 ou suivant la revendication 2 et au moins l'une des revendications 3 à 5,
dans laquelle
la troisième unité (301) à volet a un ou plusieurs troisièmes volets (310) et la troisième unité (301) à volet a en outre une ou plusieurs troisièmes unités (390) d'immobilisation, qui sont associées respectivement a un ou plusieurs troisièmes volets (310), et la troisième unité (390) d'immobilisation immobilise les troisièmes volets (310) dans la position (330) d'arc électrique perturbateur de la section de liaison, de manière à faire obstacle à un retour à la position (315) de fonctionnement, après un arc électrique perturbateur dans la section (20) de liaison.

7. Installation de distribution à isolation par de l'air suivant la revendication 2 ou suivant la revendication 2 et au moins l'une des revendications 3 à 6,
dans laquelle
la troisième unité (301) à volet a un ou plusieurs troisièmes volets (310) et la troisième unité (301) à volet a en outre une ou plusieurs quatrièmes unités (490) d'immobilisation, qui sont associées respectivement à un ou à plusieurs troisièmes volets (310), et la quatrième unité (490) d'immobilisation immobilise les troisièmes volets (310) dans la position (340) d'arc électrique perturbateur de la section d'interrupteur, de manière à faire obstacle à un retour à la deuxième position (315) de fonctionnement des troisièmes volets (310), après un arc électrique perturbateur dans la section (10) d'interrupteur.

8. Installation (1) de distribution à isolation par de l'air suivant la revendication 2 ou suivant la revendication 2 et au moins l'une des revendications 3 à 7,
dans laquelle
la troisième unité (301) à volet a un ou plusieurs troisièmes volets (310) et les troisièmes volets (310) ne font pas obstacle dans la position (315) de fonctionnement à un courant d'air dans la deuxième cheminée (200) de ventilation ou subdivise un courant d'air dans la deuxième cheminée (200) de ventilation en un courant d'air de section de liaison et en un courant d'air de section d'interrupteur.

9. Installation de distribution à isolation par de l'air suivant la revendication 1 ou suivant la revendication 1 et au moins l'une des revendications 3 à 8,
dans laquelle
une ventilation forcée produit un courant d'air dans au moins une première cheminée (100) de ventilation.

10. Installation de distribution à isolation par de l'air suivant la revendication 2 ou suivant la revendication 2 et au moins l'une des revendications 3 à 10,
dans laquelle
une ventilation passive produit un courant d'air dans au moins une deuxième cheminée (200) de ventilation.
